Europäisches Patentamt

European Patent Office

Office européen des brevets

(19)

(11) **EP 0 900 812 B1**

(12) **EUROPÄISCHE PATENTSCHRIFT**

(45) Veröffentlichungstag und Bekanntmachung des Hinweises auf die Patenterteilung:
**06.05.2004 Patentblatt 2004/19**

(51) Int Cl.⁷: **C08G 18/10**, C08G 18/08

(21) Anmeldenummer: **98115772.0**

(22) Anmeldetag: **21.08.1998**

(54) **Verfahren zur kontinuierlichen Herstellung von thermoplastisch verarbeitbaren Polyurethanen in einem Zweiwellenextruder mit spezieller Temperaturführung**

Process for continuous production of thermoplastic polyurethanes in a double-shaft extruding device with a special temperature-guiding

Procédé de production en continu de polyurethanes thermoplastiques dans une extrudeuse à deux arbres avec réglage special de température

(84) Benannte Vertragsstaaten:
**BE DE FR GB IT NL**

(30) Priorität: **03.09.1997 DE 19738498**

(43) Veröffentlichungstag der Anmeldung:
**10.03.1999 Patentblatt 1999/10**

(73) Patentinhaber: **Bayer MaterialScience AG**
**51368 Leverkusen (DE)**

(72) Erfinder:
• **Bräuer, Wofgang, Dr.**
**51375 Leverkusen (DE)**
• **Müller, Friedmann, Dr.**
**41470 Neuss (DE)**
• **Winkler, Jürgen**
**40764 Langenfeld (DE)**
• **Heidingsfeld, Herbert**
**50226 Frechen (DE)**

(56) Entgegenhaltungen:
**EP-A- 0 571 828        EP-A- 0 598 283**
**DE-A- 2 610 980**

**Beschreibung**

Die Erfindung betrifft ein mehrstufiges Verfahren zur kontinuierlichen Herstellung von thermoplastisch verarbeitbaren Polyurethanen mit verbessertem Verarbeitungsverhalten in einem Zweiwellenextruder mit spezieller Temperaturführung.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978) 819 oder Kautschuk, Gummi, Kunststoffe 35 (1982), 568 gegeben.

TPU werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 70 Shore A bis 75 Shore D.

Die TPU können kontinuierlich oder diskontinuierlich hergestellt werden. Die technische Herstellung in Extrudern ist seit langem bekannt (DE-OS 1 964 834). Hierbei werden die Aufbaukomponenten einzeln oder vorgemischt in den Extruder dosiert und die Reaktion wird im Extruder bei Temperaturen zwischen 90° und 220°C, die über die Schneckengehäuse vorgegeben werden, durchgeführt. Nachteilig an diesem Verfahren ist, daß Homogenität und Entformungsverhalten der so hergestellten TPU nicht für alle Anwendungsgebiete ausreichend sind.

Nach DE-OS 2 059 570 werden alle Reaktionskomponenten gleichzeitig einem intensiv mischenden und knetenden Doppelschneckenextruder zugeführt. Die Maschine ist dabei in einen Einzugsteil, einen Misch- und Reaktionsraum und eine Ausstoßzone unterteilt. Durch ein vom Einzugsteil (30°-127°C) zur Ausstoßzone (177°-249°C) linear ansteigendes Temperaturprofil der Schneckengehäuse wird die geforderte gleichmäßige Viskositätseinstellung überall in den Zonen erreicht. Die relativ niedrigen Temperaturen von 130 bis 170°C in der Reaktionszone führen zum Teil zu Hartsegmentausscheidungen. Aufgrund der hohen Endtemperatur in der Austragszone wird trotz der Mischelemente keine für eine gute Durchmischung ausreichende Viskosität erreicht, sodaß kein knötchenfreies Produkt zu erhalten ist. Außerdem werden bei diesen hohen Endtemperaturen schlecht entformbare Produkte erhalten.

Eine leichte Verbesserung der TPU-Homogenität wird durch ein in DE-OS 2 610 980 beschriebenes Verfahren erreicht. Hierbei werden die Ausgangsprodukte auf 180° bis 250°C vorerhitzt. Die Gehäusetemperaturen des Extruders werden auf ein von der Einzugszone (180° bis 250°C) bis zum Austrag (165° bis 200°C) abfallendes Temperaturprofil eingestellt. So werden feste Ablagerungen im Reaktionsteil des Extruders vermieden. Am Ende der Schnecke wird das Produkt durch die erniedrigte Temperatur thermisch geschont und bei höheren Viskositäten leichter ausgeformt. Nachteilig an diesem Verfahren ist aber die verstärkte Abhängigkeit von der Rohstoffreaktivität. Bei den üblichen Reaktivitätsschwankungenen der technisch verfügbaren Monomere startet die TPU-Bildungsreaktion bei diesen hohen Anfangstemperaturen so schnell, daß selbst intensive Monomerdurchmischung nicht gewährleisten kann, daß vor dem Start der Reaktion eine homogene Mischung der Reaktanden vorliegt. Die unzureichende Vermischung führt dann zu inhomogenen Produkten.

Zur Verbesserung der TPU-Homogenität wurde in DE-OS 23 02 564 auch der Einsatz von speziellen Förder- und Misch-/Knetelementen im Reaktionsextruder vorgeschlagen. Nach EP-A 708 124 werden diese über vier verschiedene Zonen im Extruder verteilt. Dabei müssen aber die Temperatur- und Reaktionsführung und die Katalysatordosierung in Abhängigkeit von der Rohstoffreaktivität exakt auf die Schneckengeometrie abgestimmt werden, damit die kritische Reaktionsphase genau an der Stelle auftritt, wo sich die Knetelemente des Extruders befinden. Auch ist die Herstellung unterschiedlicher Produkttypen mit einer einzigen Schneckengeometrie schwierig.

In EP-A 571 830 wird beschrieben, daß in einem einfachen Batch-Verfahren durch Umsetzung von Polyol mit einer Teilmenge des Diisocyanates, Einmischen des restlichen Diisocyanates und anschließende Kettenverlängerung ein TPU mit einer gegenüber den Standardverfahren deutlich erhöhten Rekristallisationstemperatur erhalten wird, welches ein schnelleres Entformen ermöglicht. Die so erhaltenen Produkte ergeben aber aufgrund des Herstellverfahren stippige Folien und sind damit nicht für die Verarbeitung durch Extrusion geeignet.

Es wurde nun gefunden, daß man durch ein neues Herstellverfahren mit einer einzigen Schneckengeometrie verschiedene TPU-Produkte mit verbessertem Entformungsverhalten und hoher Homogenität, insbesondere für den Extrusionsbereich, herstellen kann.

Gegenstand der Erfindung ist ein Verfahren zur kontinuierlichen Herstellung thermoplastisch verarbeitbarer Polyurethane, bei dem ein isocyanat-terminiertes Prepolymer bei Temperaturen <200°C mit Kettenverlängerer intensiv, bevorzugt innerhalb von maximal 5 Sekunden, vermischt und die erhaltene Mischung in einem Zweiwellenextruder, dessen Wellen bevorzugt gleichen Drehsinn aufweisen, unter quasi-adiabatischen Reaktionsbedingungen zum thermoplastisch verarbeitbaren Polyurethan umgesetzt wird.

Die Umsetzung des Reaktionsgemisches zum thermoplastisch verarbeitbaren Polyurethan erfolgt im Zweiwellenextruder unter quasi-adiabatischen Reaktionsbedingungen, d.h. im Gegensatz zur üblichen Praxis wird die Temperatur nicht von außen durch Heizung oder Kühlung der Schneckengehäuse des Extruders vorgegeben. Die Temperatur der Reaktionsmischung wird daher außer durch die Reaktionswärme nur durch den Eintrag mechanischer Energie durch die Wellen des Extruders und die Wärmeabstrahlung der Gehäuse beeinflußt.

Bevorzugt wird das isocyanat-terminierte Prepolymer hergestellt, indem man lineare hydroxylterminierte Polyole a) mit einem mittleren Molekulargewicht $\overline{M}_n$ von 500 bis 5000 mit organischem Diisocyanat b) kontinuierlich in einem Mischaggregat mit hoher Scherenergie mischt, diese Mischung kontinuierlich in einem Reaktor bei Temperaturen > 120°C bis zu einem Umsatz >90 % bezogen auf die Komponente a) zu einem isocyanat-terminierten Prepolymer umsetzt, das Prepolymer gegebenenfalls mit weiterem Diisocyanat b) mischt und diese Mischung auf eine Temperatur <200°C abkühlt.

Als Komponente a) werden lineare hydroxylterminierte Polyole mit einem mittleren Molekulargewicht $\overline{M}_n$ von 500 bis 5000 eingesetzt. Produktionsbedingt enthalten diese oft kleine Mengen an nichtlinearen Verbindungen. Häufig spricht man daher auch von "im wesentlichen linearen Polyolen". Bevorzugt werden Polyester-, Polyether-, Polycarbonat-Diole oder Gemische aus diesen verwendet.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin und Diole , wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, daß ein noch thermoplastisch verarbeitbares Produkt entsteht. Die im wesentlichen linearen Polyether-Diole besitzen vorzugsweise mittlere Molekulargewichte $\overline{M}_n$ von 500 bis 5000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B gegebenenfalls substituierten ω-Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone. Die Polyester-Diole besitzen mittlere Molekulargewichte $\overline{M}_n$ von 500 bis 5000 und können einzeln oder in Form von Mischungen untereinander zur Anwendung kommen.

Als organische Diisocyanate b) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate wie Hexamethylendiisocyanat, cycloaliphatische Diisocyanate wie Isophorondiisocyanat, 1,4-Cyclohexan-düsocyanat, 1-Methyl-2,4-cyclohexan-diisocyanat und 1-Methyl-2,6-cyclohexan-diisocyanat sowie die entsprechenden Isomerengemische, 4,4'- Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, daß ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als Kettenverlängerungsmittel werden Diole oder Diamine mit einem Molekulargewicht von 60 bis 400 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, z.B. Terephthalsäure-bisethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z. B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z. B. als Kettenabbrecher oder Entformungshilfen, zugesetzt werden. Beispielhaft genannt seien Alkohole wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,1:1,0, vorzugsweise 0,95:1,0 bis 1,10:1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)-ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen.

Neben den TPU-Komponenten und den Katalysatoren können auch Hilfsmittel und/oder Zusatzstoffe zugesetzt werden. Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch können andere Elastomere wie Kautschuk, Ethylen/Vinylacetatcopolymere, Styrol/Butadiencopolymere sowie andere TPU verwendet werden. Weiterhin zur Einarbeitung geeignet sind handelsübliche Weichmacher wie Phosphate, Phthalate, Adipate, Sebacate und Alkylsulfonsäureester.

In einer bevorzugten Ausführungsform der Erfindung werden zur Prepolymerbildung die Reaktionskomponenten kontinuierlich in einem Mischaggregat mit hoher Scherenergie gemischt. Dies kann beispielsweise ein Mischkopf vorzugsweise ein hochtouriger Stachelmischer, oder eine Düse sein. Die Mengen werden erfindungsgemäß bevorzugt so gewählt, daß das NCO/OH-Verhältnis der Menge bzw. Teilmenge von Diisocyanat b) und Polyol a) 1,5:1 bis 5,0:1 , bevorzugt 2,05:1 bis 3,0:1 beträgt.

Die Prepolymerherstellung erfolgt bevorzugt kontinuierlich in einem Reaktor, beispielsweise einem Rohr. Besonders bevorzugt werden ein Rohr mit Statikmischern oder ein gerührtes Rohr (Rohrmischer) mit einem Länge/Durchmesser-Verhältnis von größer als 4:1 eingesetzt. In einer besonders bevorzugten Form wird zur Prepolymerherstellung eine Kombination von Düse und Rohr mit Statikmischern oder ein Rohrmischer verwendet.

Bei der Herstellung des Prepolymeren sollte erfindungsgemäß möglichst vollständiger Umsatz erreicht werden, d.h. im Prepolymer sollten mehr als 90 Mol-% des Polyols umgesetzt sein. Die Reaktionstemperaturen liegen bevorzugt oberhalb von 120°C, besonders bevorzugt zwischen 140° und 220°C.

Vor der Umsetzung mit Kettenverlängerer wird dem Prepolymer gegebenenfalls kontinuierlich weiteres Diisocyanat b) schnell zugemischt. Bevorzugt werden dazu ein oder mehrere Statikmischer in einem Rohr verwendet. Es können aber auch eine Düse, ein Mischkopf oder die Mischelemente eines Extruders eingesetzt werden.

In einer bevorzugten Ausführungsform der Erfindung wird die Prepolymermischung auf eine Temperatur <200°C, bevorzugt <175°C, abgekühlt. Geeignet dafür sind ein gegebenenfalls gekühltes Rohr oder der mit Förderelementen ausgestattete gekühlte Teil eines Extruders. Besonders bevorzugt ist Kühlung in einem von außen gekühlten Zweiwellenextruder. Damit wird verhindert, daß bei der folgenden Reaktion Inhomogenitäten aufgrund ungenügender Komponentenvermischung entstehen.

Erfindungsgemäß wird das Prepolymer mit Kettenverlängerer intensiv, bevorzugt innerhalb von maximal 5 Sekunden, vermischt. Auch hierfür wird ein mit hoher Scherenergie arbeitendes Mischaggregat bevorzugt, z.B. ein Mischkopf, eine Düse oder ein hochtouriger Schneckenextruder mit geringem Mischvolumen. Besonders bevorzugt wird die intensive Mischung durch die Mischelemente eines Zweiwellenextruders mit gleichem Drehsinn beider Wellen durchgeführt. In einer bevorzugten Variante des Verfahrens wird dabei das entsprechende Schneckengehäuse weder beheizt noch gekühlt; in einer weiteren bevorzugten Variante wird das Gehäuse gekühlt.

Die erhaltene Mischung wird in einem Zweiwellenextruder, dessen Wellen bevorzugt gleichen Drehsinn aufweisen, unter quasi-adiabatischen Reaktionsbedingungen zum thermoplastisch verarbeitbaren Polyurethan umgesetzt. Die Schneckengehäuse des Extruders werden dabei weder beheizt noch mit irgendeinem besonderen Medium gekühlt. Es findet lediglich eine Wärmeabstrahlung gegen die Umgebung statt. Man kann diese Art der Temperaturführung "quasi-adiabatisch" nennen. Hierbei wird das TPU durch die eigene Reaktionswärme soweit erhitzt, daß immer eine homogene Reaktion gewährleistet ist; es werden aber nicht so hohe Temperaturen erreicht, daß das Produkt geschädigt wird. Die Massetemperaturen durchlaufen ein erst ansteigendes und dann leicht abfallendes Profil mit einem Maximum bei 210° bis 240°C.

Das sich bei der Durchführung des erfindungsgemäßen Verfahrens im Zweiwellenextruder einstellende Temperaturprofil kann gemessen und als Steuergröße zur Einstellung der Produkteigenschaften herangezogen werden, da die sich im Extruder einstellenden Temperaturen mit der Reaktivität der Rohstoffe korrelieren. Ist diese zu groß, kann mit der vorgebenen Apparatur keine ausreichende Durchmischung der Rohstoffe gewährleistet werden. Die Folge daraus ist, daß inhomogene Reaktionsprodukte erhalten werden. Ist die Reaktivität zu gering, kann die TPU-Herstellung im Extruder nicht mit dem notwendigen Umsatz durchgeführt werden. Durch die Steuerung der Reaktivität der dem Extruder zugeführten Mischung kann eine gleichbleibend gute Produktqualität erreicht werden. Gegenstand der Erfindung ist daher auch ein Verfahren, bei dem das sich im Extruder einstellende Temperaturprofil gemessen und mit einem vorgegebenen Soll-Temperaturprofil verglichen wird und Abweichungen durch Veränderung der Reaktivität der dem Extruder zugeführten Mischung korrigiert werden. Das Soll-Temperaturprofil kann beispielsweise durch einen Probelauf bei dem ein Produkt mit den gewünschten Eigenschaften erhalten wurde, ermittelt worden sein. Die Reaktivität der dem Extruder zugeführten Mischung kann z.B durch Variation der Katalysatordosierung oder der Temperatur der dem Extruder zugeführten Mischung bzw. der zu ihrer Herstellung eingesetzten Komponenten eingestellt werden. So läßt sich die Reaktivität durch Erhöhung der zugegebenen Katalysatormenge oder Temperaturerhöhung steigern oder durch Verringerung der Katalysatorzugabe oder Temperaturverringerung senken.

Das nach dem erfindungsgemäßen Verfahren hergestellte TPU kann zu Spritzgießartikeln, Folien, Beschichtungsmassen oder Fasern verarbeitet werden. Bei Spritzgießanwendungen zeichnen sich die Produkte bei niedriger Aufschmelztemperatur durch eine verbesserte Entformbarkeit aus, was dem Spritzgießverarbeiter eine verkürzte Taktzeit ermöglicht. Durch Extrusion lassen sich aus dem erfindungsgemäß hergestellten TPU Folien mit hoher Homogenität, hervorragendem Aufschmelzverhalten und einer sehr guten Standfestigkeit des Folienschlauches herstellen. Bei allen Anwendungen ist der Wärmestand des TPU durch das erfindungsgemäße Verfahren deutlich verbessert.

### Beispiele

In den folgenden Beispielen werden als Maß für die beschriebene verbesserte Entformbarkeit die Ergebnisse von DSC-Messungen (differential scanning calorimetry) angegeben. Dabei korreliert die Kristallisationstemperatur $T_C$ mit dem Rekristallisationsvermögen (C.S. Schollenberger, Abstr. Pap. Am. Chem. Soc. 1979, 83; J.Foks u.a., Eur. Pol. J. 25, 31).

Die DSC-Messungen wurden mit einem Kalorimeter des Typs DSC-7 der Firma Perkin Elmer durchgeführt. Das TPU-Produkt wurde im Stickstoff-Medium mit 20°C/min von -70°C bis 260°C aufgeheizt, danach mit 40°C/min auf -70°C abgekühlt. Die Rekristallisation macht sich in der Abkühlphase durch ein exothermes Signal bemerkbar.

Die Schubmodulmessungen wurden an Spritzgießstäben vorgenommen. Zur Messung wurde ein Gerät des Typs RDA der Firma Rheometrics verwendet. Während der Messung, die mit einer Frequenz von 1 Hz im Temperaturbereich von -125°C bis zur Erweichung bei ca. 200°C durchgeführt wurde, wurde die Temperatur in Schritten von 5 Kelvin erhöht. Als Maß für den Wärmestand wird die Temperatur angegeben, bei der ein Modul von 1 MPa unterschritten wird (Verlust der Formstabilität).

**Beispiele**

In den Beispielen wurde folgende Gesamt-Rezeptur verwendet:

1,0 mol Polybutandiol-1,4-adipat (Molekulargewicht ca. 2200)
2,5 mol 1,4-Butandiol
3,5 mol 4,4'-Diphenylmethandüsocyanat
0,7 Gew.-%, bezogen auf TPU, Bisethylenstearylamid (Dosierung in Gehäuse 1 des Extruders)

**Beispiel 1 (nicht erfindungsgemäßes Verfahren)**

Das Polyol, in dem 150 ppm, bezogen auf die Gesamtmenge an Polyol, Zinndioctoat als Katalysator gelöst waren, wurde auf 140°C erhitzt und kontinuierlich in das erste Gehäuse eines Extruders des Typs ZSK 83 (Firma Werner/Pfleiderer) dosiert. In das gleiche Gehäuse wurde die gesamte Menge an auf 60°C erwärmtem 4,4'-Diphenylmethandiisocyanat dosiert. In das Gehäuse 5 förderte man kontinuierlich 1,4-Butandiol. An den 13 Gehäusen der ZSK wurde ein von 150° bis 240°C ansteigendes Temperaturprofil vorgegeben. Die Drehzahl der Schnecke betrug 300 U/min. Die Dosiergeschwindigkeit wurde so eingestellt, daß die Verweilzeit der Reaktionskomponenten in der ZSK ca. 1 Minute betrug. Am Ende der Schnecke wurde die heiße Schmelze als Strang abgezogen, im Wasserbad gekühlt und granuliert.

**Beispiel 2 (nicht erfindungsgemäßes Verfahren)**

Das Polyol, in dem 140 ppm, bezogen auf die Gesamtmenge an Polyol, Zinndioctoat als Katalysator gelöst waren, wurde auf 160°C erhitzt und kontinuierlich in ein Rohr mit 3 Statikmischern (Firma Sulzer) dosiert. Gleichzeitig pumpte man eine Teilmenge 1 (= 2.45 mol) an auf 60°C erwärmtem 4,4'-Diphenylmethandiisocyanat in das Rohr. Die Verweilzeit im Rohr mit den Statikmischern betrug 30 Sekunden. Das entstandene Prepolymer war zu 98 Mol-%, bezogen auf den Polyester, umgesetzt. Durch einen vierten nachgeschalteten Statikmischer (Firma Sulzer) wurde die Teilmenge 2 (=1.05 mol) des 4,4'-Diphenylmethandiisocyanates innerhalb von 5 Sekunden in das Prepolymer eingemischt. Die Reaktionsmischung wurde in das Gehäuse 1 eines Extruders des Typs ZSK 83 dosiert und dort analog Beispiel 1 in den folgenden Gehäusen auf etwa 220°C erwärmt. In das Gehäuse 5 dosierte man das 1,4-Butandiol, das durch ein kurzes, intensiv mischendes Mischelement unter Gehäuse 6 in das Prepolymer eingemischt wurde. In dem letzten Teil der Schnecke wurden die Reaktionskomponenten zum TPU umgesetzt. Die Temperatur der Schnek-kengehäuse wurde auf 240°C eingestellt. Die Drehzahl der Schnecke betrug 300 U/min. Am Ende der Schnecke wurde die heiße Schmelze als Strang abgezogen, im Wasserbad gekühlt und granuliert.

**Beispiel 3 (erfindungsgemäß)**

Die Prepolymerherstellung erfolgte analog Beispiel 2. Das Prepolymer wurde dann im ersten Teil des Extruders (Gehäuse 1 bis 3) gekühlt. In das Gehäuse 5 dosierte man das 1,4-Butandiol, das durch ein kurzes, intensiv mischendes Mischelement unter Gehäuse 6 in das Prepolymer eingemischt wurde. Die Zumischung von 1,4-Butandiol und die Reaktion zum TPU wurden unter quasi-adiabatischen Bedingungen durchgeführt.

**Beispiel 4 (erfindungsgemäß)**

Die Prepolymerherstellung erfolgte analog Beispiel 2, das 1,4-Butandiol wurde in Gehäuse 5 zudosiert. Der erste Teil des Extruders (Gehäuse 1 bis 5) wurde gekühlt, danach wurde die Reaktion zum TPU unter quasi-adiabatischen Bedingungen durchgeführt.

Die in den Beispielen an den Schneckengehäusen des Extruders vorgegebenen Temperaturprofile sind in Tabelle 1 wiedergegeben.

**Beispiel 5 (nicht erfindungsgemäß)**

Rezeptur:    0,4 mol Polypropylenetherglykol (Molekulargewicht = 2000)
             0,6 mol Polytetramethylenetherglykol (Molekulargewicht = 1000)

1,84 mol 1,4-Butandiol
0,08 mol 1,6-Hexandiol
2,92 mol 4,4'-Diphenylmethandiisocyanat
0,7 Gew.-% (bezogen auf TPU) Bisethylenstearylamid (Dosierung ZSK Gehäuse 1)

Das Polyolgemisch, in dem 140 ppm, bezogen auf die Gesamtmenge an Polyol, Zinndioctoat als Katalysator gelöst waren, wurde auf 200°C erhitzt und kontinuierlich in einen Rohrmischer (Drehzahl des Rührers 300 U/min) dosiert. Gleichzeitig pumpte man eine Teilmenge 1 (=2,28 mol) an auf 60°C erwärmten 4,4'-Diphenylmethandiisocyanat in den Rohrmischer. Die Verweilzeit im Rohrmischer lag bei 60 sec.

Das entstandene Prepolymer war zu 97 mol%, bezogen auf Polyol, umgesetzt. Durch einen Statikmischer (Firma Sulzer) wurde die Teilmenge 2 (= 0,64 mol) des 4,4'-Diphenylmethandiisocyanates innerhalb von 5 sec in das Prepolymer eingemischt. Die Reaktionsmischung wurde in das Gehäuse 1 eines Extruders des Types ZSK 120 dosiert und dort analog Beispiel 1 in den folgenden Gehäusen auf etwa 180°C erwärmt. In das Gehäuse 3 dosierte man das Butandiol/Hexandiol-Gemisch, das durch ein kurzes, intensiv mischendes Mischelement unter Gehäuse 4 in das Prepolymer eingemischt wurde. In dem letzten Teil der Schnecke wurden die Reaktionskomponenten zum TPU umgesetzt. Die Temperatur der Schneckengehäuse wurde auf 240-250°C eingestellt. Die Drehzahl der Schnecke betrug 300 U/min. Am Ende der Schnecke wurde die heiße Schmelze als Strang abgezogen, im Wasserbad gekühlt und granuliert.

### Beispiel 6 (erfindungsgemäß)

Die Rezeptur und Prepolymerherstellung erfolgte analog Beispiel 5. Das Prepolymer wurde dann im ersten Teil des Extruders (Gehäuse 1 bis 3) gekühlt. Die Zumischung des Butandiol/Hexandiol-Gemisches erfolgte wiederum analog Beispiel 5. Die Reaktion zum TPU wurde unter quasi-adiabatischen Bedingungen durchgeführt.

### Blasfolienherstellung

Das TPU-Granulat wurde in einem Einwellen-Extruder des Typs 30/25D Plasticorder PL 2000-6 der Firma Brabender aufgeschmolzen (Dosierung 3 kg/h; Temperatur 185-205°C) und durch einen Folienblaskopf zu einer Schlauchfolie extrudiert.

### Herstellung von Spritzgießkörpern

Das TPU-Granulat wurde in einer Spritzgießmaschine des Typs D60 (32er Schnecke) der Firma Mannesmann aufgeschmolzen (Massetemperatur ca. 225°C) und zu Stäben geformt (Formtemperatur 40°C; Stabgröße 80x10x4 mm).

Die Daten der in den Beispielen erhaltenen Produkte sind in Tabelle 2 zusammengefaßt. Die erfindungsgemäßen Beispiele zeigen im Vergleich zum Prepolymerverfahren mit Temperaturvorgabe durch die Extrudergehäuse bzw. der Prepolymerherstellung im Statikmischer mit nachfolgender Reaktion im Extruder mit vorgegebenem Temperaturprofil einen deutlich verbesserten Wärmestand und eine höhere Rekristallisationstemperatur. Dies führt zu einer schnelleren Aushärtung von Spritzgießkörpern. Zusätzlich ist aufgrund der optimalen Reaktionsbedingungen die Folienhomogenität verbessert.

## Tabelle 1 Vorgabe Schneckengehäusetemperaturen

| Beispiel | Geh.1 | 2 | 3 | 4 | 5 | 6 | 7 | 8 | 9 | 10 | 11 | 12 | 13 |
|---|---|---|---|---|---|---|---|---|---|---|---|---|---|
| 1* | 150°C | 180°C | 200°C | 220°C | 220°C | 240°C | 240°C | 240°C | 240°C | 240°C | 220°C | 180°C | 150°C |
| 2* | 150°C | 180°C | 200°C | 220°C | 220°C | 240°C | 240°C | 240°C | 240°C | 240°C | 220°C | 180°C | 150°C |
| 3 | 80°C | 80°C | 80°C | keine | keine | keine | keine | keine | keine | keine | keine | 150°C | 110°C |
| 4 | 80°C | 80°C | 80°C | 80°C | 80°C | keine | keine | keine | keine | keine | keine | 150°C | 110°C |
| 5* | 180°C | 180°C | 180°C | 180°C | 230°C | 240°C | 240°C | 250°C | 250°C | 240°C | 240°C | 110°C | 110°C |
| 6 | 80°C | 80°C | 80°C | keine | keine | keine | keine | keine | keine | 110°C | 110°C | 110°C | 110°C |

\* nicht erfindungsgemäßes Vergleichsbeispiel

EP 0 900 812 B1

### Tabelle 2 Produktdaten

| Beispiel | Härte Shore A (DIN 53505) | Spritzguß: Härte Shore A direkt nach Entformen | MVR bei 200°C (DIN 53 735) [ccm/10 min] | Rekrist.-Temp. (DSC) [°C] | Blasfolien-homogenität | Wärmestand Schubmodul Temperatur bei 1 MPa [°C] |
|---|---|---|---|---|---|---|
| 1* | 85 | 73 | 13 | 104 | befriedigend | 157 |
| 2* | 85 | 71 | 12 | 111 | schlecht | 155 |
| 3 | 85 | 74 | 12 | 116 | gut | 166 |
| 4 | 85 | 73 | 12 | 110 | gut | 160 |
| 5* | 85 | - | 30 | 99 | schlecht | - |
| 6 | 85 | - | 33 | 102 | gut | - |

* nicht erfindungsgemäßes Vergleichsbeispiel

EP 0 900 812 B1

**Patentansprüche**

1. Verfahren zur kontinuierlichen Herstellung thermoplastisch verarbeitbarer Polyurethane, bei dem ein isocyanatterminiertes Prepolymer bei Temperaturen <200°C mit Kettenverlängerer intensiv vermischt und die erhaltene Mischung in einem Zweiwellenextruder unter quasi-adiabatischen Reaktionsbedingungen zum thermoplastisch verarbeitbaren Polyurethan umgesetzt wird.

2. Verfahren gemäß Anspruch 1, bei dem das sich im Extruder einstellende Temperaturprofil gemessen und mit einem vorgegebenen Soll-Temperaturprofil verglichen wird und Abweichungen durch Veränderung der Reaktivität und/oder der Temperatur der dem Extruder zugeführten Mischung korrigiert werden.

**Claims**

1. A process for the continuous preparation of melt-processable polyurethanes, wherein an isocyanate-terminated prepolymer is intensively mixed with chain extender at temperatures of <200°C, and the mixture obtained is converted to melt-processable polyurethane in a twin screw extruder under quasi-adiabatic reaction conditions.

2. A process according to claim 1, wherein the temperature profile obtained in the extruder is measured and compared with a preset desired temperature profile and discrepancies are corrected by altering the reactivity and/or the temperature of the mixture fed to the extruder.

**Revendications**

1. Procédé pour la préparation continue de polyuréthanes aptes au travail thermoplastique dans lequel on soumet un prépolymère à groupes terminaux isocyanate à mélange intensif avec des agents d'allongement des chaînes à des températures inférieures à 200°C et on convertit le mélange obtenu en polyuréthane apte au travail thermoplastique dans une extrudeuse à deux vise dans des conditions de réaction quasi-adiabatiques.

2. Procédé selon la revendication 1, dans lequel on mesure le profil de température qui s'établit dans l'extrudeuse, on le compare avec un profil de température étalon et on corrige les écarts en faisant varier la réactivité et/ou la température du mélange envoyé à l'extrudeuse.